# EUROPÄISCHE PATENTSCHRIFT

(11) **EP 4 229 849 B1**
(45) Veröffentlichungstag und Bekanntmachung des Hinweises auf die Patenterteilung: **25.09.2024**
(21) Anmeldenummer: 21794372.9
(22) Anmeldetag: 18.10.2021
(51) Int. Cl.: H04L 47/26, H04L 47/263, H04L 47/30

(54) **DATENFLUSSSTEUERUNG IN EINEM NETZWERK**
DATA FLOW CONTROL IN A NETWORK
CONTRÔLE DE FLUX DE DONNÉES DANS UN RÉSEAU

(30) Priorität: 19.10.2020 AT 508942020
(43) Veröffentlichungstag der Anmeldung: 23.08.2023
(73) Patentinhaber: B&R Industrial Automation GmbH, 5142 Eggelsberg (AT)
(72) Erfinder: WEBER, Horst, 5142 Eggelsberg (AT); MEISL, Franz, 5142 Eggelsberg (AT)
(74) Vertreter: Patentanwälte Pinter & Weiss OG
(86) Internationale Anmeldenummer: PCT/EP2021/078759
(87) Internationale Veröffentlichungsnummer: WO 2022/084222

(56) Entgegenhaltungen:
- EP-A1- 2 278 757
- GB-A- 2 348 580

## Beschreibung

Die gegenständliche Erfindung betrifft ein Verfahren zur Datenübertragung in einem Netzwerk, wobei ein erster Teilnehmer Datensymbole in Datenframes an einen zweiten Teilnehmer überträgt und der zweite Teilnehmer das Datenframe weiterleitet und/oder verarbeitet. Weiters betrifft die gegenständliche Erfindung ein Netzwerk umfassend einen ersten Teilnehmer und einen mit dem ersten Teilnehmer über eine Datenverbindung verbundenen zweiten Teilnehmer, wobei der erste Teilnehmer ausgestaltet ist, über die Datenverbindung Datensymbole in Datenframes an den zweiten Teilnehmer zu übertragen.

Es wird grundlegend zwischen Standard-Netzwerken und Echtzeit-Netzwerken unterschieden, wobei in erstgenannten spontan Datenframes zwischen Teilnehmern übertragen werden und in letztgenannten zyklisch Datenframes zwischen Teilnehmern übertragen werden. Ein Datenframe beginnt mit einem Start-Header, umfasst mehrere Datensymbole und endet mit einem End-Header. Die Datensymbole sind damit die eigentlichen Nutzdaten, die in einem Datenframe transportiert werden. Ein Teilnehmer, welcher einen Datenframe empfangen hat, speichert diesen zur Gänze in einem Store-And-Forward-Buffer, oder einen Anteil davon in einem Cut-Through-Buffer zwischen. Ein Zwischenspeichern von ganzen Datenframes und anschließendes Weiterleiten dieser ganzen Datenframes wird als "Store-and-Forward" bezeichnet. "Cut-Through" hingegen bezeichnet, ein Zwischenspeichern lediglich eines Anteils der betreffenden Datenframes, welcher für die Entscheidung, wohin (d.h. über welchen Zielport) der Datenframe weitergeleitet werden soll, erforderlich sind. Dieser Anteil kann beispielsweise einige Bytes umfassen und ist vorzugsweise am Anfang des Datenframes angeordnet. Nach der Ermittlung des Zielports wird der zwischengespeicherte Anteil des Datenframes, sowie der weitere Teil des Datenframes an den entsprechenden Zielport geleitet. Dadurch, dass bei "Cut-Through" ein möglichst geringer Anteil eines Datenframes zwischengespeichert daraufhin weitergeleitet wird, - wobei der restliche Anteil des Datenframes direkt und ohne Zwischenspeichern weitergeleitet wird - kann die Durchlaufzeit verringert werden. Die im Cut-Through-Buffer oder Store-And-Forward-Buffer (in Folge allgemein als Switch-Buffer bezeichnet) zwischengespeicherten Datenframes werden dann vom Teilnehmer verarbeitet (wenn der Zielport ein interner Port ist) und/oder weitergeleitet (wenn der Zielport ein externer Port ist) und im Anschluss wieder aus dem Switch-Buffer entfernt.

In Echtzeit-Netzwerken, wie auch Standard-Netzwerken kann der Fall auftreten, dass nach dem Empfang eines Datenframes eine Verzögerung bei der Verarbeitung oder der Weiterleitung auftritt, z.B. weil Teilnehmer einen unterschiedlichen Takt aufweisen. Werden Datenframes von einem Teilnehmer mit einem höheren Takt an einen Teilnehmer mit einem geringeren Takt übermittelt, so kann der Fall eintreten, dass letztgenannter Datenframes mit einem höheren Takt (dem Takt des sendenden Teilnehmers) empfängt, als er sie verarbeiten/weiterleiten kann (sein eigener Takt), womit ein dem Switch-Buffer nachgelagerter Symbol-Buffer überlaufen kann.

In Echtzeit-Netzwerken, wie auch Standard-Netzwerken, kann der Fall eintreten, dass ein Teilnehmer (z.B. ein Switch) Datenframes an mehreren Ports empfängt und diese Datenframes über einen Port weiterleiten soll. Dabei kann der Fall eintreten, dass vom besagten Teilnehmer rascher Datenframes empfangen werden als sie weitergesendet oder verarbeitet werden können, womit ebenso eine Verzögerung auftritt. Dabei kann ebenso ein Symbol-Buffer des empfangenden Teilnehmers überlaufen.

Um ein Überlaufen eines Symbol-Buffers zu verhindern, werden in Echtzeit-Netzwerken und Standard-Netzwerken Datenflussteuerungen, die dazu dienen, eine Übertragung von Datenframes zwischen Teilnehmern möglichst effizient und verlustfrei zu steuern, implementiert.

Eine Datenflussteuerung kann in Echtzeit-Netzwerken und Standard-Netzwerken auch erforderlich sein, um die Zuordnung von Datenframes zu einem Teilnehmer zu steuern, wenn der Teilnehmer an mehreren Ports simultan Datenframes empfängt und zudem an zumindest einem anderen Port Datenframes absenden soll. Als anderer Port kann beispielsweise ein interner Port vorgesehen sein, welcher eine Verarbeitung im Teilnehmer ermöglicht. Ebenso kann als anderer Port ein externer Port vorgesehen sein, welcher ein Weiterleiten an andere Teilnehmer ermöglicht. Bei Verwendung einer Datenflussteuerung muss nicht jeder Datenframe einzeln und explizit geplant werden, womit die vorhandene Bandbreite im Echtzeit-Netzwerk effizient ausgenutzt werden kann.

Ein Echtzeit-Netzwerk konfiguriert nach dem Standard TSN IEEE 802.1Qbu weist beispielsweise eine zeitgesteuerte Datenflussteuerung auf. Dabei weist ein Switch jedem Teilnehmer einen zyklisch wiederholenden Sendezeitraum zum Senden von Datenframes zu, wobei Echtzeit-Netzwerk Switches vorgesehen sind, welche entsprechend konfiguriert sind. Diese zeitgesteuerte Datenflussteuerung ist relativ kompliziert, da sichergestellt werden muss, dass keine von verschiedenen Teilnehmern gesendeten Datenpakete überlappen.

Es wird bezüglich der Datenflusssteuerung zwischen On/Off-Verfahren und Credit-Basierten Verfahren unterschieden. Bei On/Off-Verfahren teilt der empfangende Teilnehmer dem sendenden Teilnehmer mit, wenn er bereit ist, Datenframes zu empfangen (On), woraufhin der sendende Teilnehmer mit dem Senden der Datenframes beginnt. Sobald der empfangende Teilnehmer keine Datenframes mehr empfangen kann, beispielsweise weil sein Symbol-Buffer zur Gänze voll ist, so signalisiert er dem sendenden Teilnehmer, dass dieser die Übertragung der Datenframes pausieren soll (Off). Hierzu werden explizite Steuersignale (z.B. RTS und CTS bei RS-232 oder IRDY und TRDY bei PCI) auf separat ausgeführten Steuerleitungen übertragen, was als out-of-band Signalisierung bezeichnet wird. Es werden jedoch auch spezielle Steuersymbole verwendet (z.B. ASCII Codes für X-On/X-Off, Pause Frame bei Ethernet IEEE802.3x), was als in-band Signalisierung bezeichnet wird.

Bei Credit-basierten Verfahren teilt der empfangende Teilnehmer dem sendenden Teilnehmer in gewissen Zeitabständen mit, wie viele Datenframes (Credits) noch empfangen werden können. Der sendende Teilnehmer sendet entsprechend Datenframes und stoppt die Übertragung nach einer vorgegebenen Anzahl an Datenframes, sofern er in der Zwischenzeit vom empfangenden Teilnehmer nicht neue Information bezüglich zu empfangenden Datenframes erhalten hat. Die Informationen bezüglich Credits werden üblicherweise in-band übermittelt (z.B. PCIe).

In Ethernet-Netzwerken hingegen wird der aktuelle Datenframe (samt Headern) fertig gesendet, wobei erst nach der vollständigen Übertragung des Datenframes ein eine Sendepause erfolgt, d.h. keine Frames mehr gesendet werden. Eine Datenflusssteuerung, insbesondere in modernen seriellen Netzwerken, wirkt meist auf ganze Datenframes, was bedeutet, dass ein Frame nur komplett (incl. Headern) gesendet oder nicht gesendet wird. Die Granularität ist daher grob und die Reaktionsfähigkeit träge.

Beispielsweise ist es in einem Echtzeit-Netzwerk, konfiguriert nach dem Standard TSN IEEE 802.1Qbu möglich Datenframes zu priorisieren, wobei niedrig priore Datenframes zerteilt werden können, um höher priore Datenframes zu senden. Diese Zerteilung erfolgt jedoch derart, dass das betreffende Datenframe in kleinere Datenframes geteilt wird. Dabei werden zusätzliche Header zu Beginn und Ende der jeweiligen kleineren Datenframes hinzugefügt, womit auch jeweils ein CRC (cyclic redundancy check) usw. erstellt werden muss, womit ein zusätzlicher Overhead entsteht. Wie erwähnt, sind die Datenflussteuerung hier zudem zeitgesteuert, was bedeutet, dass jedem Teilnehmer ein zyklisch wiederholender Sendezeitraum vorgegeben wird, womit Datenframes beispielsweise auch zyklisch unterbrochen werden können.

Aus der EP 2 278 757 A1 ist ein Verfahren und eine zugehörige Verrichtung zum Anpassen einer Datenraten eines Paketdatenstroms zwischen einem Sender und einem Empfänger bekannt, um eine verlustfreie Paketdatenübertragung unter Verwendung eines Flusskontrollmechanismus zu ermöglichen. Dabei wird der vom Empfänger empfangene Paketdatenstrom in einem Pufferspeicher gepuffert und mit einer im wesentlichen konstanten Übertragungsrate geleert. Der Empfänger sendet einen oder mehrere sogenannte "Backpressure request" an den Sender, welche einen Wert enthalten, der für den Sender eine Wartezeit angibt, die der Sender benötigt, um die Übertragung weiterer Datenpakete zu unterbrechen.

Die GB 2 348 580 A zeigt ein System und ein Verfahren zur Überlastungskontrolle in paketbasierten Kommunikationsnetzen, insbesondere zur Kontrolle von Überlastungen an einem Netzwerk-Switch. Dabei wird von einem Netzwerk-Switch ein sogenannten "Backpressure"-Signal in Form eines Steuerrahmens erzeugt, wenn ein lokaler Puffer bis zu einem vorgegebenen Niveau gefüllt ist. Wird der Steuerrahmen von einem Paket-Sender empfangen, so wird die Übertragung von Paketen für einen durch den Steuerrahmen angegebenen Zeitraum gestoppt.

Es ist die Aufgabe der gegenständlichen Erfindung, ein Verfahren zur Datenflusssteuerung anzugeben, wobei ein Overhead reduziert wird.

Diese Aufgabe wird durch ein Verfahren gelöst, wobei bei einer auftretenden Verzögerung des Weiterleitens und/oder der Verarbeitung des Datenframes der zweite Teilnehmer den ersten Teilnehmer dazu anweist, das Übertragen der Datenframes mit einer Granularität von einem Datensymbol zu pausieren, wobei nach der Pausierung der erste Teilnehmer das Übertragen der Datenframes mit einer Granularität von einem Datensymbol fortsetzt. Weiters wird die Aufgabe durch ein Netzwerk, vorzugsweise Echtzeit-Netzwerk, gelöst, wobei der zweite Teilnehmer ausgestaltet ist, bei einer auftretenden Verzögerung des Weiterleitens und/oder der Verarbeitung des Datenframes (DF1), den ersten Teilnehmer dazu anweisen, das Übertragen der Datenframes mit einer Granularität von einem Datensymbol zu pausieren. Eine Verzögerung beim Weiterleiten und/oder der Verarbeitung des Datenframes kann auftreten, da der zweite Teilnehmer einen geringeren Takt als der erste Teilnehmer aufweist und somit der zweite Teilnehmer Datenframes mit einem höheren Takt empfängt, als er sie verarbeiten/weiterleiten kann. Auch kann beispielsweise eine Verzögerung beim Weiterleiten und/oder der Verarbeitung des Datenframes auftreten, wenn der zweite Teilnehmer an mehreren Ports Datenframes empfängt und diese Datenframes über einen externen Port weiterleiten oder einen internen Port verarbeiten soll

Pausieren oder unterbrechen bedeutet im Sinne der gegenständlichen Erfindung ein Stoppen eines Frames (Datenframe oder Pause-Frame), wobei der Frame nach der Pausierung/Unterbrechung unverändert fortgesetzt wird. Das bedeutet, dass ein Frame in Frame-Teile aufgeteilt wird, die jedoch in Summe den Frame ergeben. Beispielsweise pausieren/unterbrechen Echtzeit-Netzwerke, konfiguriert nach dem Standard TSN IEEE 802.1Qbu Datenframes nicht, sondern zerteilen Datenframes in kleinere Datenframes, die jeweils mit einem Header versehen werden. Diese kleineren Datenframes sind somit keine Datenframe-Teile, sondern eigenständige Datenframes, die einen Teil der Datensymbole des ursprünglichen Datenframes enthalten.

Erfindungsgemäß kann bei einer auftretenden Verzögerung beim Weiterleiten und/oder der Verarbeitung des Datenframes am zweiten Teilnehmer sofort die Übertragung des Datenframes vom ersten zum zweiten Teilnehmer pausiert werden, ohne den aktuellen Datenframe beenden oder verwerfen zu müssen, womit der Datenframe in einzelne Datenframe-Teile, jeweils umfassend eine Anzahl an Datensymbolen, aufgeteilt wird. Diese Aufteilung ist nicht vorab fest vorgegeben, sondern erfolgt durch die Anweisung des zweiten Teilnehmers zur Pausierung der Übertragung des Datenframes. Die Übertragung kann daraufhin wiederaufgenommen werden, indem der verbleibende Datenframe-Teil des aktuellen Datenframes versendet wird, wobei innerhalb eines Datenframes auch mehrere Pausierungen, d.h. eine Unterteilung in mehrere Datenframe-Teile, stattfinden können. Es muss weiters nicht jeder Datenframe vorab einzeln und explizit geplant (gescheduled) werden, wie es bei bekannten zeitgesteuerten Echtzeit-Netzwerken der Fall ist. Vielmehr ermöglicht das erfindungsgemäße Verfahren ein sich selbst regelndes System bei optimaler Ausnutzung der Bandbreite. Dadurch entstehen ein geringer Overhead und eine schnelle Reaktionsfähigkeit im Datenfluss, während Kosten niedrig gehalten werden. Es kann durch die fein granulare Unterbrechbarkeit von einem Datensymbol eine niedrige Latenz erzielt werden, was besonders vorteilhaft ist, wenn viele Teilnehmer hintereinandergeschaltet sind.

Vorzugsweise speichert der zweite Teilnehmer empfangene Datenframes in einem Symbol-Buffer zwischen. Der Symbol-Buffer kann nach einem am zweiten Teilnehmer vorgesehenen Switch-Buffer (Cut-Through-Buffer oder Store-And-Forward-Buffer) angeordnet sein.

Weiters kann der zweite Teilnehmer bei Überschreitung eines vorgegebenen oberen Füllstands seines Symbol-Buffers den ersten Teilnehmer dazu anweisen, das Übertragen der Datenframes zu pausieren. Die Überschreitung des oberen Füllstands ist somit ein Indikator für eine auftretende Verzögerung beim Weiterleiten und/oder der Verarbeitung des Datenframes.

Vorzugsweise setzt der erste Teilnehmer das Übertragen der Datenframes nach Ablauf einer Pausendauer fort. Dies ist insbesondere in Echtzeit-Netzwerken vorteilhaft, welche eine zyklische Datenkommunikation vorsehen, kann aber auch in Standard-Netzwerken Anwendung finden. Das Fortsetzen der Übertragung der Datenframes kann durch einen Time-Out nach Ablauf der Pausendauer erfolgen. Die Pausendauer beginnt somit mit der Pausierung des Datenframes und endet mit dem Fortsetzen des Datenframes. Wie erwähnt, kann der Datenframe auch auf mehr als zwei Datenframe-Teile aufgesplittet werden.

Der zweite Teilnehmer kann den ersten Teilnehmer dazu anweisen, das Übertragen der Datenframes fortzusetzen. Beispielsweise kann der zweite Teilnehmer bei Unterschreitung eines vorgegebenen unteren Füllstands des Symbol-Buffers den ersten Teilnehmer dazu anweisen, das Übertragen der Datenframes fortzusetzen. Ist ein unterer Füllstand unterschritten (d.h. ausreichend Platz im Symbol-Buffer verfügbar), wird durch den zweiten Teilnehmer die Anweisung an den ersten Teilnehmer ausgegeben, den Versand des Datenframes fortzusetzen, womit weitere Datensymbole (d.h. ein zweiter Datenframe-Teil) empfangen (und ggf. zwischengespeichert oder auch direkt weitergeleitet) wird. Dies ist insbesondere in Standard-Netzwerken (d.h. Netzwerke, die nicht echtzeitfähig sind), vorteilhaft. In Echtzeit-Netzwerken kann bei Verlust der durch den zweiten Teilnehmer an den ersten Teilnehmer gesendeten Anweisung zur Fortsetzung der Übertragung ohne weitere Maßnahmen eine nicht berechenbare Pausierung entstehen.

Vorteilhafterweise sendet der erste Teilnehmer an den zweiten Teilnehmer einen höher prioren Frame, der dadurch die Übertragung des Datenframes pausiert bzw. unterbricht. Nach Beendigung der Übertragung des höher prioren Frames wird die Übertragung des Datenframes fortgesetzt. Es können auch mehrere höher priore Frames vorhanden sein. Je nach Priorität kann damit auch ein höher priorer Frame die Übertragung eines nieder prioren Frames unterbrechen.

Weiters kann das Übertragung einer Pauseanfrage vom zweiten Teilnehmer zum ersten Teilnehmer ebenfalls über einen Frame höherer Priorität erfolgen.

Vorzugsweise können Pause-Frames oder Management-Frames höher prioreFrames darstellen.

Vorzugsweise überträgt der erste Teilnehmer während der Pausierung der Übertragung des Datenframes ein Pause-Frame an den zweiten Teilnehmer. Dies kann realisiert werden, indem Pausenframes eine höhere Priorität als Datenframes eingeräumt wird, womit ein Pausenframe den Datenframe unterbricht. Der Pausenframe muss keine speziellen Pause-Daten enthalten und kann vom empfangenden Teilnehmer verworfen werden. Sobald die Übertragung von Pausenframes beendet wurde, wird das Übertragen der Datenframes fortgesetzt.

Es sind source-synchrone Echtzeit-Netzwerke bekannt, in welchen kein Takt zwischen den Teilnehmern übertragen wird. Dies ist auch bei einem Echtzeit-Netzwerke, deren Teilnehmer nach dem neu entwickelten Protokoll X2X+ konfiguriert sind, der Fall. Um es den Teilnehmern zu ermöglichen, den Takt aus den empfangenen Frames (Datenframes und Pause-Frames) zu rekonstruieren (Clock-Data-Recovery - CDR), werden permanent 8B/10B codierte Daten in Frames übertragen. Somit werden neben Datenframes vorzugsweise auch Pause-Frames 8B/10B codiert.

Vorzugsweise weist der zweite Teilnehmer den ersten Teilnehmer durch Übermittlung einer aktiven Pause-Start-Anfrage zum Versand des Pause-Frames an. Der zweite Teilnehmer kann den ersten Teilnehmer durch Übermittlung einer Pause-End-Anfrage, vorzugsweise in einem zyklischen weiteren Management-Frame, zum Beenden des Versands des Pause-Frames anweisen.

Es ist besonders vorteilhaft, wenn der zweite Teilnehmer die aktive Pause-Start-Anfrage (und/oder sofern vorgesehen die Pause-End-Anfrage) in einem zyklischen weiteren Management-Frame an den ersten Teilnehmer übermittelt. Dabei ist für den weiteren Management-Frame ein weiterer Management-Zyklus vorgesehen.

Es wird vorzugsweise in äquidistanten Zeitabständen des weiteren Management-Zyklus jeweils ein weiterer Management-Frame vom zweiten Teilnehmern an den ersten Teilnehmer gesendet. Der weitere Management-Frame kann Management-Daten umfassen, welche dazu dienen die Kommunikation zwischen den Teilnehmern zu managen. Insbesondere kann der weitere Management-Frame aktive Pause-Start-Anfragen (und/oder sofern vorgesehen auch Pause-End-Anfragen) an den ersten Teilnehmer bezüglich weiterer vom ersten Teilnehmer an den zweiten Teilnehmer gesendeter weiterer Datenframes enthalten.

Es kann beispielsweise ein Bit im weiteren Management-Frame als Pause-Start-Anfrage vorgesehen sein, und ein Bit für eine Pause-End-Anfrage. Es kann auch dasselbe Bit für eine Pause-Start-Anfrage und eine Pause-End-Anfrage vorgesehen sein, wobei das Bit beispielsweise für die Pause-Start-Anfrage '1' und für die Pause-End-Anfrage '0' gesetzt werden kann, oder umgekehrt - dabei kann die Pause-End-Anfrage gleichbedeutend mit einer inaktiven Pause-Start-Anfrage sein.

Vorzugsweise überträgt der erste Teilnehmer zyklisch einen Management-Frame an den zweiten Teilnehmer, wobei der erste Teilnehmer eine Übertragung von Datenframes mit einer Granularität von einem Datensymbol unterbricht, den Management-Frame an den zweiten Teilnehmer überträgt, und anschließend die Übertragung der Datenframes fortsetzt. Für den Management-Frame ist ein Management-Zyklus vorgesehen. Es wird in äquidistanten Zeitabständen des Management-Zyklus jeweils ein Management-Frame gesendet. Der Management-Frame kann Management-Daten umfassen, welche dazu dienen, die Kommunikation zwischen den Teilnehmern zu managen. Insbesondere kann der Management-Frame Pause-Start-Anfragen (und/oder optional auch Pause-End-Anfragen) an den zweiten Teilnehmer bezüglich weiterer vom zweiten Teilnehmer an den ersten Teilnehmer gesendeter Datenframes enthalten.

Überträgt der erste Teilnehmer zum Zeitpunkt des Management-Zyklus einen Pause-Frame, so unterbricht er die Übertragung des Pause-Frames, überträgt den Management-Frame an den zweiten Teilnehmer, und setzt anschließend die Übertragung des Pause-Frames fort. Das bedeutet, dass der Pause-Frame während der Übertragung des Management-Frames pausiert wird.

Es kann also dem Management-Frame eine höhere Priorität als den Pause-Frames und/oder Datenframes eingeräumt werden.

Vorzugsweise überträgt der zweite Teilnehmer Datensymbole in einem weiteren Datenframe an den ersten Teilnehmer, wobei der erste Teilnehmer den zweiten Teilnehmer dazu anweist, das Übertragen des weiteren Datenframes mit einer Granularität von einem Datensymbol zu pausieren, wobei nach der Pausierung der zweite Teilnehmer das Übertragen des weiteren Datenframes fortzusetzt. Das bedeutet, dass auch weitere Datenframes, welche vom zweiten Teilnehmer an den ersten Teilnehmer übertragen werden, durch Anweisungen des ersten Teilnehmers an den zweiten Teilnehmer pausiert werden können. Dabei können dieselben Mechanismen verwendet werden, wie in Bezug der Übertragung von Datenframes vom ersten Teilnehmer an den zweiten Teilnehmer beschrieben werden.

Zusammengefasst kann der erste/zweite Teilnehmer jeweils mehrere logische Kanäle (einen Daten-Kanal, einen Pause-Kanal und einen Management-Kanal) zu einem Datenstrom vereinen, wobei jeweils Datenframes, Pause-Frames und Management-Frames an der Datenverbindung verschachtelt werden. Dabei haben der Management Kanal (d.h. die Management-Frames) die höchste Priorität, der Pause-Kanal (d.h. die Pause-Frames) mittlere Priorität und der Daten-Kanal (d.h. die Datenframes) die niedrigste Priorität. Ein logischer Kanal kann jederzeit von einem logischen Kanal mit höherer Priorität unterbrochen werden.

Eine Verwendung des erfindungsgemäßen Verfahrens ist insbesondere in Echtzeit-Netzwerken, in welchen bereits eine zyklische Übertragung von Management-Frames zum Austausch von Zeitinformationen zwischen den Teilnehmern vorgesehen ist, vorteilhaft. Wird beispielsweise eine 8B/10B Leitungscodierung der übertragenen Daten verwendet, so werden übertragene Daten verwürfelt (engl. gescrambled), um Auswirkungen auf die elektromagnetische Abstrahlung zu minimieren.

Sind spezielle Steuerzeichen, sogenannte K-Symbole, im Leitungscode enthalten (wie es beim neu entwickelten X2X+-Protokoll der Fall ist), so kann ein bereits definiertes "No Operation" (NOp) K-Symbol verwendet werden, um als Pause-Frame zu fungieren, womit ein Pause-Frame nur ein NOp-Symbol lang ist. Es könnten natürlich auch mehrere derartige Pause-Frames in Folge gesendet werden, um eine längere Unterbrechung des Datenframes zu signalisieren. Da jedoch K-Symbole nicht verwürfelt werden, würde ein aus mehreren NOp-Symbolen zusammengesetzter Pause-Frame fortlaufend die gleichen Bitfolgen bewirken, womit eine nachteilige elektromagnetische Abstrahlung erzeugt wird.

Um dies zu vermeiden, kann lediglich der Anfang und das Ende eines Pause-Frames mittels K-Symbolen definiert werden. Beispielsweise kann der Anfang eines Pause-Frames durch eine Start-of-Pause-Kennung in Form eines K28.3-Symbols und das Ende eines Pause-Frames durch eine End-of-Pause-Kennung in Form eines K28.4-Symbols definiert sein. Die zwischen der Start-of-Pause-Kennung und der End-Of-Pause-Kennung gesendeten Pausedaten transportieren dann keine eigentliche Information, können aber gescrambled werden. Da die Pausedaten des Pause-Frames in dieser Ausführung keinen relevanten Inhalt haben, können sie vom Empfänger verworfen werden.

Nicht nur die Pause-Frames, sondern auch die Datenframes und Management-Frames können unter Verwendung von K-Symbolen der Leitungscodierung definiert werden. So kann der Anfang eines Management-Frames durch eine Start-Of-Management-Kennung, beispielsweise in Form eines K28.1-Symbols, definiert sein, wogegen ein Ende eines Management-Frames als eine End of Management-Kennung, z.B. in Form eines K28.0-Symbols definiert sein. Gleichermaßen kann ein Anfang eines Datenframes als Start-of-Frame-Kennung in Form eines K29.7-Symbols und ein Ende eines Datenframes durch eine End-of-Frame-Kennung in Form eines K27.7-Symbol definiert sein.

Wird die Pause-Start-Anfrage im Management-Frame übertragen, so kann ein Bit im Header des Management-Frames verwendet werden. Alternativ kann der Management Frame auch aus einem einzelnen Symbol, welches die Pause-Start-Anfrage darstellt, bestehen. Damit kann der Overhead minimiert werden, wenn es im Netzwerk nicht erforderlich ist andere Management-Informationen im Management-Frame zu übertragen. Es kann somit ein Pause-Start-Symbol definiert werden, z.B. das K28.1-Symbol, welches in diesem Fall ja nicht als Start of Management-Symbol verwendet wird. Wenn der erste Teilnehmer als Pause-Start-Anfrage ein solches Pause-Start-Symbol vom zweiten Teilnehmer empfängt, dann wird ein Pause-Frame gestartet.

Ist eine Pause-End-Anfrage vorgesehen, so kann diese gleichermaßen mittels eines definierten Pause-End-Symbols in einem Management-Frame erfolgen.

Im neu entwickelten X2X+-Protokoll ist beispielsweise ein Management Zyklus von 4 µs vorgesehen. Das bedeutet, dass innerhalb eines Management-Zyklus, d.h. zwischen dem Versand von zwei Management-Frames bei einer Datenübertragungsrate von 51,2 MSymbole/s 204 Datenymbole übertragen werden können. Werden diese Datensymbole (ein oder mehrere Datenframes) alle in einem Symbol-Buffer zwischengespeichert, so muss nach 204 empfangenen Datensymbolen ein Management-Frame mit einer positiven Pause-Anfrage versandt werden, damit der Symbol-Buffer nicht überläuft. Vorzugsweise wird der Symbol-Buffer jedoch größer gewählt, da der Symbol-Buffer auch kurz nach dem Versand des letzten Management-Frames (mit negativer Pause-Anfrage) überlaufen kann. Vorzugsweise wird der Symbol-Buffer doppelt, besonders vorzugsweise dreimal so groß gewählt, wie Datensymbole zwischen zwei Management-Frames übermittelt werden können.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
- Fig.1: ein Echtzeit-Netzwerk mit zwei Teilnehmern,
- Fig.2a: einen beispielhaften Aufbau eines Datenframes,
- Fig.2b: einen beispielhaften Aufbau eines Pause-Frames,
- Fig.2c: einen beispielhaften Aufbau eines Management-Frames,
- Fig.3: einen Datenframe, welcher von einem Pause-Frame unterbrochen wird,
- Fig.4: die Übertragung von Datenframes zwischen dem ersten und zweiten Teilnehmer.

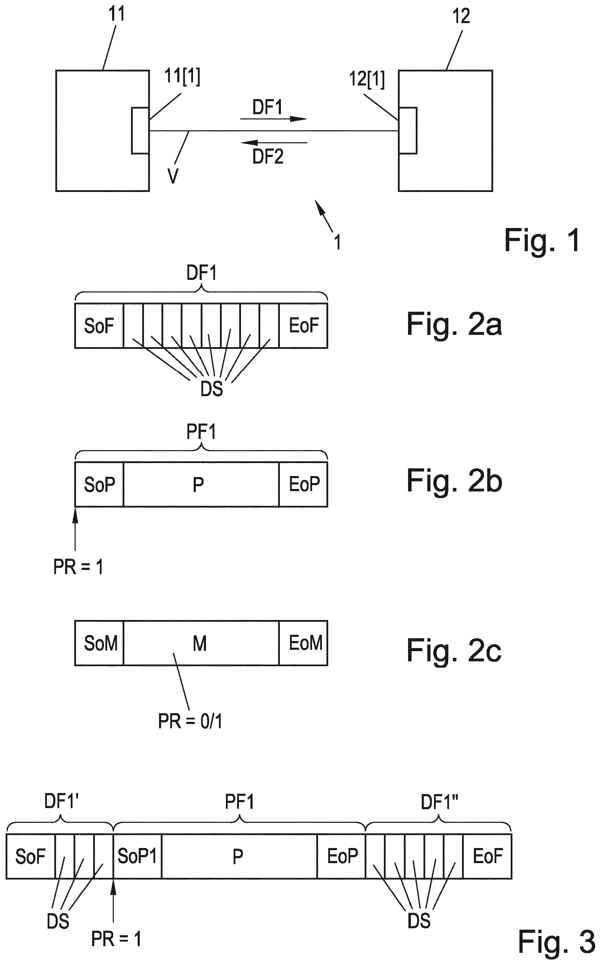

Ein Netzwerk 1, hier vorzugsweise als Echtzeit-Netzwerk konfiguriert, umfasst eine Mehrzahl an Teilnehmern welche linear oder auch verzweigt miteinander verbunden sind und wobei benachbarte Teilnehmer Frames mit Symbolen zueinander übertragen. Ist das Netzwerk 1 ein Echtzeit-Netzwerk, so übertragen benachbarte Teilnehmer zyklisch Frames mit Symbolen zueinander. In Fig. 1 ist ein Netzwerk 1 mit lediglich einem ersten Teilnehmer 11 und einen zweiten Teilnehmer 12 dargestellt ist. Um Frames mit Symbolen zu übertragen ist an den Teilnehmern 11, 12 jeweils zumindest einen Port 11 [1], 12[1] vorgesehen. Die Ports 11[1], 12[1] sind jeweils zum Empfang und Versand von Symbolen in Frames konfiguriert und über eine Datenverbindung V miteinander verbunden.

Es werden zyklisch Datenframes DF1, DF2, jeweils umfassend eine Anzahl an Datensymbolen DS, zwischen den Teilnehmern 11, 12 übertragen. Somit übermittelt der erste Teilnehmer 11 über seinen Port 11 [1] und die Datenverbindung V Datenframes DF1 an den Port 12[1] des zweiten Teilnehmers 12, welcher die Datenframes DF1 empfängt, in einem zugehörigen Switch-Buffer (je nach Ausgestaltung ein Cut-Through-Buffer oder Store-And-Forward-Buffer) zur Gänze (falls ein Store-And-Forward-Buffer als Switch-Buffer vorgesehen ist) oder zum Teil (falls ein Cut-Through-Buffer als Switch-Buffer vorgesehen ist) zwischenspeichert und anschließend verarbeitetet/weiterleitet. Gleichermaßen übermittelt der zweite Teilnehmer 12 über seinen Port 12[1] und die Datenverbindung V weitere Datenframes DF2 an den Port 11 [1] des ersten Teilnehmers 11, welcher die weiteren Datenframes DF2 empfängt, zur Gänze oder zum Teil in einem zugehörigen Switch-Buffer zwischenspeichert und anschließend verarbeitetet/weiterleitet. Natürlich können die Teilnehmer 11, 12 auch zusätzliche Ports aufweisen, welche wiederum über Datenverbindungen mit Ports zusätzlicher Teilnehmer verbunden sind.

Vom ersten Teilnehmer 11 versendete Datenframes DF1 und vom zweiten Teilnehmer 12 versendete weitere Datenframes DF2 weisen vorzugsweise, aber nicht notwendigerweise, dieselbe Struktur auf, beginnen jeweils mit einer Start-of-Frame-Kennung SoF und enden mit einer End-of-Frame-Kennung EoF. Zwischen der Start-of-Frame-Kennung SoF und der End-of-Frame-Kennung EoF werden (hier acht) Datensymbole DS übertragen, wie es in Fig. 2a dargestellt ist.

Sendet der erste Teilnehmer 11 einen oder mehrere Datenframes DF1 an den zweiten Teilnehmer, so ist der zweite Teilnehmer 12 dazu ausgestaltet, den ersten Teilnehmer 11 dazu anzuweisen, das Übertragen der Datenframes DF1 mit einer Granularität von einem Datensymbol DS zu pausieren. Das bedeutet, dass die Übertragung auf Anweisung des zweiten Teilnehmers 12 auch inmitten eines Datenframes DF1 unterbrochen werden kann. Im Anschluss kann der zweite Teilnehmer 12 den ersten Teilnehmer 11 dazu anweisen, das Übertragen des Datenframes DF1 fortzusetzen. Somit kann der Datenframe DF1 in einen zuerst übermittelten ersten Datenframe-Teil DF1' und einen später übermittelten zweiten Datenframe-Teil DF1" aufgeteilt werden.

Eine Pausierung der Übertragung des Datenframes DF1 kann vorzugsweise über einen Frame mit höherer Priorität als die Priorität des Datenframes DF1 erfolgen.

Vorzugsweise übermittelt der erste Teilnehmer 11 während der Pausierung der Übertragung des Datenframes DF1 einen Pause-Frame PF1 über die Datenverbindung V an den zweiten Teilnehmer 12. Der Pause-Frame PF1 startet vorzugsweise mit einer Start-of-Pause-Kennung SoP und endet mit einer End-of-Pause-Kennung EoP. Zwischen der Start-of-Pause-Kennung SoP und der End-of-Pause-Kennung EoP werden Pause-Daten P übertragen, wie in Fig. 2b dargestellt.

Der Beginn des Pause-Frames PF1 kann durch den zweiten Teilnehmer 12, beispielsweise durch Übermittlung einer Pause-Start-Anfrage PR=0/1 (PR=1 stellt eine "aktive" Pause-Start-Anfrage dar, PR=0 eine "inaktive" Pause-Start-Anfrage) an den ersten Teilnehmer 11, angefordert werden. Das Ende des Pause-Frames PF1 erfolgt hier vorteilhafterweise nach Ablauf der Pausenzeit tp. Es kann das Ende des Pause-Frames PF1 aber auch durch den zweiten Teilnehmer 12, beispielsweise durch Übertragung einer Pause-End-Anfrage PER, angewiesen werden. Die Pause-Daten P können vom ersten Teilnehmer 11 verworfen werden.

Eine simultane Datenübertragung (u.A. der Pause-Start-Anfrage PR=0/1) vom zweiten Teilnehmer 12 zum ersten Teilnehmer wird weiter unten ausgeführt.

Fig. 3 stellt eine Übertragung eines Datenframes DF1 mit acht Datensymbolen DS von einem ersten Teilnehmer 11 an einen zweiten Teilnehmer 12 dar, wobei der Datenframe DF1 von einem Pause-Frame PF1 unterbrochen und somit pausiert wird. Der erste Teilnehmer 11 startet die Übertragung des Datenframes DF1 an den zweiten Teilnehmer 12 mit einer Start-of-Frame-Kennung SoF, gefolgt von drei Datensymbolen DS (erster Datenframe-Teil DF1'). Daraufhin wird der Datenframe DF1 durch eine aktive Pause-Start-Anfrage PR=1 des zweiten Teilnehmers 12 unterbrochen, womit ein Pause-Frame PF1, beginnend mit einer Start-of-Pause-Kennung SoP, gesendet wird. Nach der Start-of-Pause-Kennung SoP werden grundlegend so lange Pause-Daten P übertragen, bis der Pause-Frame PF1 mit einer End-Of-Pause-Kennung EoP beendet wird (oder sofern vorgesehen von einem Management-Frame MF1 unterbrochen wird, siehe weiter unten).

Das Ende des Pause-Frames PF1 erfolgt vorzugsweise nach Ablauf der Pausendauer td. Die Pausendauer td kann beispielsweise äquivalent zur Dauer der Übertragung einer Anzahl an Symbolen z.B. Datensymbolen DS) festgelegt werden (z.B. 204 Symbole) Es kann das Ende des Pause-Frames PF1 aber auch, wie schon der Anfang des Pause-Frames PF1, vom zweiten Teilnehmer 12 ausgelöst werden. Hierzu kann der zweite Teilnehmer eine Pause-End-Anfrage an den ersten Teilnehmer 11 übermitteln.

Im Anschluss wird der zweite Datenframe-Teil DF1" des Datenframes DF1, d.h. hier fünf weitere Datensymbole DS, übertragen und mit einer End-of-Frame-Kennung EoF beendet. Der Datenframe DF1 wurde somit durch den Pause-Frame PF1 in ein ersten Datenframe-Teil DF1' und einen zweiten Datenframe-Teil DF1" unterbrochen. Im Anschluss können zusätzliche Datenframes DF1 vom ersten Teilnehmer 11 an den zweiten Teilnehmer 12 übertragen werden.

Vorzugsweise speichert der zweite Teilnehmer 12 empfangene Datensymbole DS zur Gänze oder zum Teil in einem Symbol-Buffer zwischen und weist den ersten Teilnehmer 11 bei Überschreitung eines vorgegebenen oberen Füllstands des Symbol-Buffers dazu an, das Übertragen von Datenframes DF1 zu unterbrechen, beispielsweise durch Übertragung einer aktiven Pause-Start-Anfrage PR=1 an den ersten Teilnehmer 11. Zudem kann der zweite Teilnehmer 12 bei Unterschreitung eines vorgegebenen unteren Füllstands des Symbol-Buffers eine Pause-End-Anfrage PER an den ersten Teilnehmer 11 übermitteln, wenn der Symbol-Buffer des zweiten Teilnehmers 12 ausreichend abgearbeitet wurde, sodass der Symbol-Buffer wieder Datensymbole DS aufnehmen kann.

Das Fortsetzen der Übertragung von Datenframes DF1 durch den ersten Teilnehmern 11 an den zweiten Teilnehmer 12 kann beispielsweise nach Ablauf einer Pausendauer td und/oder durch ein Übertragen einer Pause-End-Anfrage PER an den ersten Teilnehmer 11 erfolgen.

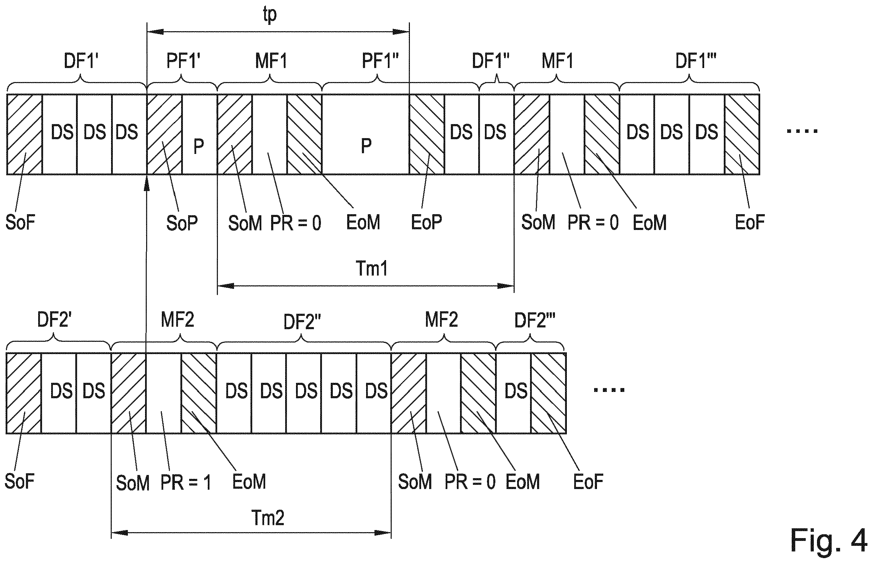

Die Pause-Start-Anfrage PR=0/1 (und optional die Pause-End-Anfrage PER) kann vom zweiten Teilnehmer 12 an den ersten Teilnehmer 11 z.B. in einem weiteren Management-Zyklus Tm2 zyklisch gesendeten weiteren Management-Frame MF2 übermittelt werden. Gleichermaßen kann der erste Teilnehmer 11 dem zweiten Teilnehmer 12 zyklisch ein Management-Frame MF1 übermitteln, welches ebenso eine Pause-Start-Anfrage PR=0/1 (und optional die Pause-End-Anfrage PER) umfassen kann, um (bei einer aktiven Pause-Start-Anfrage PR=1) vom zweiten Teilnehmer 12 an den ersten Teilnehmer 11 gesendete weitere Datenframes DF2 zu unterbrechen (und optional fortzusetzen). Um dieses Zusammenspiel zu beschreiben ist in Fig. 4 eine Übertragung eines Datenframes DF1 vom ersten Teilnehmer 11 zum zweiten Teilnehmer 12 und eine zeitgleiche Übertragung eines weiteren Datenframes DF2 vom zweiten Teilnehmer 12 zum ersten Teilnehmer 11 dargestellt.

Dabei werden in Fig.4 sowohl Pause-Frame PF1 als auch Management-Frame MF1 beispielhaft als Frames mit höherer Priorität verwendet. Es ist aber auch möglich, dass noch andere höherpriore Frames in erfindungsgemäßem Verfahren verwendet werden.

Es wird das Datenframe DF1 beginnend mit der Start-of-Frame Kennung SOF vom ersten Teilnehmer 11 an den zweiten Teilnehmer 12 übertragen. Nach dem Empfang von drei Datensymbolen DS wird der erste Teilnehmer 11 vom zweiten Teilnehmer 12 dazu angewiesen das Übertragen des Datenframes DF1 zu unterbrechen. Diese Anweisung ist hier als in einem weiteren Management-Frame MF2 übermittelte aktive Pause-Start-Anfrage PR=1 dargestellt (nach oben zeigender Pfeil). Damit wurde bis zur Pausierung nur der erste Datenframe-Teil DF1' des Datenframes DF1 übermittelt.

Der erste Teilnehmer 11 sendet daraufhin ein Pause-Frame PF1, welches grundlegend mit einer Start-of-Pause-Kennung SoP beginnt, gefolgt von Pause-Daten P, und endend mit einer End-of-Pause-Kennung EoP, wie es bereits in Fig. 2b dargestellt ist. Der erste Teilnehmer 11 übermittelt jedoch auch zyklisch (mit einem ersten Management-Zyklus Tm1) ein Management-Frame MF1 an den zweiten Teilnehmer 12, welches mit einer Start-of-Management-Kennung SoM startet und mit einer End-of-Management-Kennung EoM beendet wird. Ein derartiges Management-Frame MF1 ist in Fig. 2c dargestellt.

Zwischen der Start-of-Management-Kennung SoM und der End-of-Management-Kennung EoM werden optionalerweise Management-Daten M übermittelt, wobei in Fig 4 lediglich eine Pause-Start-Anfrage PR=0/1 als Management-Daten M dargestellt ist. Die Pause-Start-Anfrage PR=0/1 wird vorzugsweise durch ein bestimmtes gesetztes oder nicht gesetztes Bit des Management-Frames MF übertragen. Das Management-Frame MF1 kann sowohl Pause-Frames PF1, als auch Datenframes DF1 unterbrechen, hat also eine höhere Priorität als Pause-Frames PF1 und Datenframes DF1. Es wird in Fig. 4 das Pause-Frame PF1 vom Management-Frame MF1 unterbrochen. Es wird also zwar die Start-of-Pause-Kennung SoP und einige Pause-Daten PF` an den zweiten Teilnehmer 12 übertragen, danach erfolgt jedoch eine Übertragung der Start-of-Management-Kennung SoM, gefolgt von Management Daten (hier eine inaktive Pause-Start-Anfrage PR=0) und der End-of-Management-Kennung EoM an den zweiten Teilnehmer 12. Nach der Übertragung des Management-Frames MF1 wird das zuvor unterbrochene Pause-Frame PF1 nahtlos fortgesetzt. Es werden allfällige daraufhin weitere Pause-Daten P gesendet, in Fig. 4 also die Pause-Daten PF1".

Das Pause-Frame PF1 wird nach der Pausendauer td mit einer End-of-Pause-Kennung EoP beendet und daraufhin der zuvor unterbrochene Datenframe DF1 fortgesetzt, d.h. hier der zweite Datenframe-Teil DF1" des Datenframes DF1 übertragen.

Der Datenframe DF1 wird jedoch entsprechend Fig. 4 beispielhaft ein weiteres Mal unterbrochen. Da ein erster Management-Zyklus Tm1 abgelaufen ist, wird nochmals ein Management-Frame MF1 mit einer Start-of-Management-Kennung SoM gestartet. Es werden daraufhin Management Daten M (hier abermals umfassend eine inaktive Pause-Start-Anfrage PR=0) an den zweiten Teilnehmer 12 übertragen, woraufhin das Management-Frame MF1 wieder mit einer End-of-Management-Kennung EoM beendet wird. Danach wird abermals der Datenframe DF1 fortgesetzt, d.h. es wird der dritte Datenframe-Teil DF1‴ an den zweiten Teilnehmer 12 gesendet und mit einer End-of-Frame-Kennung EoF beendet. Somit wurde der gesamte Datenframe DF1 vom ersten Teilnehmer 11 an den zweiten Teilnehmer 12 übertragen. Im Anschluss kann der nächste Datenframe DF1 vom ersten Teilnehmer 11 an den zweiten Teilnehmer 12 übertragen werden.

Parallel zur Übertragung des ersten Datenframes DF1 vom ersten Teilnehmer 11 zum zweiten Teilnehmer 12 wird ein weiterer Datenframe DF2 vom zweiten Teilnehmer 12 an den ersten Teilnehmer 11 übertragen. Der weitere Datenframe DF2 beginnt mit einer Start-of-Frame-Kennung SoF, woraufhin die (hier acht) Datensymbole DS folgen. Das Datenframe DF2 wird jedoch nach zwei Datensymbolen DS von einem Management-Frame MF2 unterbrochen, womit vorerst nur ein erster weiterer Datenframe-Teil DF2' des weiteren Datenframes DF2 übertragen wird. Die Unterbrechung des weiteren Datenframes DF2 durch das Management-Frame MF2 erfolgt hier ebenso mit einer Granularität von einem Datensymbol DS. Der weitere Management-Frame MF2 startet mit einer Start-of-Management-Kennung SoM, woraufhin Management-Daten M folgen. Die Management-Daten M umfassen hier eine (aktive) Pause-Start-Anfrage PR=1, beispielsweise weil der Symbol-Buffer des zweiten Teilnehmers 12 voll ist oder einen vorgegebenen oberen Füllstand des Symbol-Buffers überschritten hat. Damit weist der zweite Teilnehmer 12 den ersten Teilnehmer 11 dazu an, das Datenframe DF1 durch das Pause-Frame PF1 zu unterbrechen (nach oben zeigender Pfeil), wie oben beschrieben. Nachdem das weitere Management-Frame MF2 durch die End-of-Management-Kennung EoM beendet wurde, werden weitere (hier fünf) Datensymbole DS gesendet.

Da die Management-Daten M des Management-Frames MF1 des ersten Teilnehmers 11 keine aktive Pause-Start-Anfrage PR=1 (sondern eine inaktive Pause-Start-Anfrage PR=0) enthalten, wird der zweite Teilnehmer 12 nicht dazu angewiesen, den weiteren Datenframe DF2 durch einen weiteren Pause-Frame PF2 zu unterbrechen. Der weitere Datenframe DF2 wird jedoch nach der Übertragung eines zweiten weiteren Datenframe-Teils DF2" abermals von einem Management-Frame MF2 unterbrochen, da der weitere Management-Zyklus Tm2 abgelaufen ist. Im weiteren Management-Frame MF2 ist keine aktive Pause-Start-Anfrage PR=1 (sondern eine inaktive Pause-Start-Anfrage PR=0) enthalten, weshalb der erste Teilnehmer 11 nicht dazu angewiesen wird, den Datenframe DF1 (d.h. hier den zweiten Frame-Teil DF1") abermals durch einen Pause-Frame PF1 zu unterbrechen.

Nachdem der weitere Management-Frame MF2 wiederum durch die End-of-Management-Kennung EoM beendet wurde, wird der weitere Datenframe DF2 fortgesetzt, was hier einem dritten weiteren Datenframe-Teil DF2‴ in Form eines Datensymbol DS entsprechen wird. Da auch die Management-Daten M des zweiten Management-Frames MF1 (wie schon des ersten Management-Frames MF1) des ersten Teilnehmers 11 keine aktive Pause-Start-Anfrage PR=1 (sondern eine inaktive Pause-Start-Anfrage PR=0) enthalten, wird der zweite Teilnehmer 12 nicht dazu angewiesen den weiteren Datenframe DF2 durch einen weiteren Pause-Frame PF2 zu unterbrechen.

Der weitere Datenframe DF2 wird mit einer End-of-Frame-Kennung EoF beendet. Damit ist die Übertragung des weiteren Datenframes DF2 (aufgeteilt auf einen ersten, zweiten und dritten weiteren Datenframe-Teil DF2`, DF2", DF2‴) vollständig abgeschlossen. Danach kann das nächste weitere Datenframe DF2 vom zweiten Teilnehmer 12 an den ersten Teilnehmer 11 übermittelt werden, was jedoch nicht dargestellt ist.

Obgleich in den Figuren lediglich eine Datenübertragung zwischen zwei Teilnehmern 11, 12 eines Netzwerks 1 darstellt, ist das beschriebene Verfahren natürlich auch auf eine Kommunikation einer Mehrzahl an Teilnehmern eines Netzwerks anwendbar.

## Patentansprüche

1. Verfahren zur Datenübertragung in einem Netzwerk (1), vorzugsweise Echtzeit-Netzwerk, wobei ein erster Teilnehmer (11) Datensymbole (DS) in Datenframes (DF1) an einen zweiten Teilnehmer (12) überträgt und der zweite Teilnehmer (12) das Datenframe (DF1) weiterleitet und/oder verarbeitet, **dadurch gekennzeichnet, dass** bei einer auftretenden Verzögerung des Weiterleitens und/oder der Verarbeitung des Datenframes (DF1) der zweite Teilnehmer (12) den ersten Teilnehmer (11) dazu anweist, das Übertragen der Datenframes (DF1) mit einer Granularität von einem Datensymbol (DS) zu pausieren, **und dass** der erste Teilnehmer (11) nach der Pausierung das Übertragen der Datenframes (DF1) mit einer Granularität von einem Datensymbol (DS) fortsetzt.

2. Verfahren nach Anspruch 1, **dadurch gekennzeichnet, dass** der zweite Teilnehmer (12) empfangene Datenframes (DF1) in einem Symbol-Buffer zwischenspeichert

3. Verfahren nach Anspruch 2, **dadurch gekennzeichnet, dass** der zweite Teilnehmer (12) bei Überschreitung eines vorgegebenen oberen Füllstands des Symbol-Buffers den ersten Teilnehmer (11) dazu anweist, das Übertragen der Datenframes (DF1) zu unterbrechen.

4. Verfahren nach einem der Ansprüche 1 bis 3, **dadurch gekennzeichnet, dass** der zweite Teilnehmer (12) den ersten Teilnehmer (11) dazu anweist, das Übertragen der Datenframes (DF1) fortzusetzen.

5. Verfahren nach einem der Ansprüche 2 bis 4, **dadurch gekennzeichnet, dass** der zweite Teilnehmer (12) bei Unterschreitung eines vorgegebenen unteren Füllstands des Symbol-Buffers den ersten Teilnehmer (11) dazu anweist, das Übertragen der Datenframes (DF1) fortzusetzen.

6. Verfahren nach einem der Ansprüche 1 bis 5, **dadurch gekennzeichnet, dass** der erste Teilnehmer (11) das Übertragen der Datenframes (DF1) nach Ablauf einer vorgegebenen Pausendauer (td) fortsetzt.

7. Verfahren nach einem der Ansprüche 1 bis 6 **dadurch gekennzeichnet, dass** der erste Teilnehmer (11) während der Unterbrechung der Übertragung der Datenframes (DF) einen Pause-Frame (PF1) an den zweiten Teilnehmer (12) überträgt.

8. Verfahren nach Anspruch 7 **dadurch gekennzeichnet, dass** der zweite Teilnehmer (12) den ersten Teilnehmer (11) durch Übermittlung einer aktiven Pause-Start-Anfrage (PR=1) zum Start des Versands des Pause-Frames (PF1) anweist.

9. Verfahren nach Anspruch 8, **dadurch gekennzeichnet, dass** der zweite Teilnehmer die aktive Pause-Start-Anfrage (PR=1) oder eine inaktive Pause-Start-Anfrage (PR=0) zyklisch mit einem weiteren Management-Zyklus (Tm2) in einem weiteren Management-Frame (MF2) an den ersten Teilnehmer (11) übermittelt.

10. Verfahren nach einem der Ansprüche 7 bis 9, **dadurch gekennzeichnet, dass** der zweite Teilnehmer (12) den ersten Teilnehmer (11) durch Übermittlung einer Pause-End-Anfrage (PER) zum Beenden des Versands des Pause-Frames (PF1) anweist.

11. Verfahren nach einem der Ansprüche 1 bis 10, **dadurch gekennzeichnet, dass** der erste Teilnehmer (11) zyklisch mit einem ersten Management-Zyklus (Tm1) einen Management-Frame (MF1) an den zweiten Teilnehmer (12) überträgt, **und dass** der erste Teilnehmer (11) eine Übertragung von Datenframes (DF1) mit einer Granularität von einem Datensymbol (DS) unterbricht, den Management-Frame (MF1) an den zweiten Teilnehmer (12) überträgt, und anschließend die Übertragung der Datenframes (DF1) fortsetzt.

12. Verfahren nach einem der Ansprüche 7 bis 11, **dadurch gekennzeichnet, dass** der erste Teilnehmer (11) zyklisch mit einem ersten Management-Zyklus (Tm1) einen Management-Frame (MF1) an den zweiten Teilnehmer (12) überträgt, **dass** der erste Teilnehmer (11) eine Übertragung von Datenframes (DF1) mit einer Granularität von einem Datensymbol (DS) unterbricht, den Management-Frame (MF1) an den zweiten Teilnehmer (12) überträgt, und anschließend die Übertragung der Datenframes (DF1) fortsetzt, **und dass** der erste Teilnehmer (11) eine Übertragung von Pause-Frames (PF1) unterbricht, den Management-Frame (MF1) an den zweiten Teilnehmer (12) überträgt, und anschließend die Übertragung des Pause-Frames (PF1) fortsetzt.

13. Verfahren nach einem der Ansprüche 1 bis 12, **dadurch gekennzeichnet, dass** der zweite Teilnehmer (12) Datensymbole (DS) in einem weiteren Datenframe (DF2) an den ersten Teilnehmer (11) überträgt, wobei der erste Teilnehmer (11) den zweiten Teilnehmer (12) dazu anweist, das Übertragen des weiteren Datenframes (DF2) mit einer Granularität von einem Datensymbol (DS) zu pausieren, und nach der Pausierung der zweite Teilnehmer (12) das Übertragen des weiteren Datenframes (DF2) fortsetzt.

14. Netzwerk (1), vorzugsweise Echtzeit-Netzwerk, umfassend einen ersten Teilnehmer (11) und einen mit dem ersten Teilnehmer (12) über eine Datenverbindung (V) verbundenen zweiten Teilnehmer (12), wobei der erste Teilnehmer (11) ausgestaltet ist, über die Datenverbindung (V) Datensymbole (DS) in Datenframes (DF1) an den zweiten Teilnehmer (12) zu übertragen **dadurch gekennzeichnet, dass** der zweite Teilnehmer (12) ausgestaltet ist, bei einer auftretenden Verzögerung des Weiterleitens und/oder der Verarbeitung des Datenframes (DF1), den ersten Teilnehmer (11) dazu anweisen, das Übertragen der Datenframes (DF1) mit einer Granularität von einem Datensymbol (DS) zu pausieren und dass der erste Teilnehmer ausgestaltet ist, das Übertragen der Datenframes (DF1) nach der Pausierung mit einer Granularität von einem Datensymbol (DS) fortzusetzen.

15. Netzwerk (1) nach Anspruch 14, **dadurch gekennzeichnet, dass** der zweite Teilnehmer (12) einen Symbol-Buffer zum Zwischenspeichern von empfangenen Datenframes (DF1) umfasst.

## Claims

1. Method for data transmission in a network (1), preferably a real-time network, wherein a first subscriber (11) transmits data symbols (DS) in data frames (DF1) to a second subscriber (12) and the second subscriber (12) forwards and/or processes the data frame (DF1), **characterized in that** the second subscriber (12) instructs the first subscriber (11) to pause the transmission of the data frames (DF1) with a granularity of one data symbol (DS), when there is a delay in the forwarding and/or processing of the data frame (DF1), **and in that** the first subscriber (11) continues to transmit the data frames (DF1) with a granularity of one data symbol (DS) after the pause.

2. Method according to claim 1, **characterized in that** the second subscriber (12) buffers received data frames (DF1) in a symbol buffer.

3. Method according to claim 2, **characterized in that** the second subscriber (12) instructs the first subscriber (11) to interrupt the transmission of the data frames (DF1), when a predetermined upper level of the symbol buffer is exceeded.

4. Method according to any of claims 1 to 3, **characterized in that** the second subscriber (12) instructs the first subscriber (11) to continue the transmission of the data frames (DF1).

5. Method according to any of claims 2 to 4, **characterized in that** the second subscriber (12) instructs the first subscriber (11) to continue the transmission of the data frames (DF1), when the symbol buffer falls below a predetermined lower level.

6. Method according to any of claims 1 to 5, **characterized in that** the first subscriber (11) continues to transmit the data frames (DF1) after a predetermined pause period (td) has elapsed.

7. Method according to any of claims 1 to 6, **characterized in that** the first subscriber (11) transmits a pause frame (PF1) to the second subscriber (12) during the interruption of the transmission of the data frames (DF).

8. Method according to claim 7, **characterized in that** the second subscriber (12) instructs the first subscriber (11) to start sending the pause frame (PF1) by transmitting an active start-of-pause request (PR=1).

9. Method according to claim 8, **characterized in that** the second subscriber cyclically transmits the active start-of-pause request (PR=1) or an inactive start-of-pause request (PR=0) with a further management cycle (Tm2) in a further management frame (MF2) to the first subscriber (11).

10. Method according to any of claims 7 to 9, **characterized in that** the second subscriber (12) instructs the first subscriber (11) to end the sending of the pause frame (PF1) by transmitting an end-of-pause request (PER).

11. Method according to any of claims 1 to 10, **characterized in that** the first subscriber (11) cyclically transmits a management frame (MF1) to the second subscriber (12) with a first management cycle (Tm1), **and in that** the first subscriber (11) interrupts a transmission of data frames (DF1) with a granularity of one data symbol (DS), transmits the management frame (MF1) to the second subscriber (12), and then continues the transmission of the data frames (DF1).

12. Method according to any of claims 7 to 11, **characterized in that** the first subscriber (11) cyclically transmits a management frame (MF1) to the second subscriber (12) with a first management cycle (Tm1), **in that** the first subscriber (11) interrupts a transmission of data frames (DF1) with a granularity of one data symbol (DS), transmits the management frame (MF1) to the second subscriber (12), and then continues the transmission of the data frames (DF1), **and in that** the first subscriber (11) interrupts a transmission of the pause frame (PF1), transmits the management frame (MF1) to the second subscriber (12), and then continues the transmission of the pause frame (PF1).

13. Method according to any of claims 1 to 12, **characterized in that** the second subscriber (12) transmits data symbols (DS) in a further data frame (DF2) to the first subscriber (11), wherein the first subscriber (11) instructs the second subscriber (12) to pause the transmission of the further data frame (DF2) with a granularity of one data symbol (DS), and after the pause, the second subscriber (12) continues the transmission of the further data frame (DF2).

14. Network (1), preferably a real-time network, comprising a first subscriber (11) and a second subscriber (12) connected to the first subscriber (12) via a data connection (V), wherein the first subscriber (11) is designed to transmit data symbols (DS) in data frames (DF1) to the second subscriber (12) via the data connection (V), **characterized in that** the second subscriber (12) is designed to instruct the first subscriber (11) to pause the transmission of the data frames (DF1) with a granularity of one data symbol (DS), when there is a delay in the forwarding and/or processing of the data frame (DF1), **and in that** the first subscriber is designed to continue the transmission of the data frames (DF1) with a granularity of one data symbol (DS) after the pause.

15. Network (1) according to claim 14, **characterized in that** the second subscriber (12) comprises a symbol buffer for buffering received data frames (DF1).

## Revendications

1. Procédé de transmission de données dans un réseau (1), de préférence un réseau en temps réel, un premier participant (11) transmettant des symboles de données (DS) dans des trames de données (DF1) à un deuxième participant (12) et le deuxième participant (12) transmettant et/ou traitant la trame de données (DF1), **caractérisé en ce que**, lorsqu'un retard se produit lors de la transmission et/ou du traitement de la trame de données (DF1), le deuxième participant (12) demande au premier participant (11) de suspendre la transmission des trames de données (DF1) avec une granularité d'un symbole de données (DS), et **en ce que** le participant (11) continue de transmettre les trames de données (DF1) avec une granularité d'un symbole de données (DS) après la suspension.

2. Procédé selon la revendication 1, **caractérisé en ce que** le deuxième participant (12) stocke temporairement les trames de données reçues (DF1) dans un tampon de symboles.

3. Procédé selon la revendication 2, **caractérisé en ce que** le deuxième participant (12) demande au premier participant (11) d'interrompre la transmission des trames de données (DF1) lorsqu'un niveau de remplissage supérieur spécifié du tampon de symboles est dépassé.

4. Procédé selon l'une des revendications 1 à 3, **caractérisé en ce que** le deuxième participant (12) demande au premier participant (11) de continuer à transmettre les trames de données (DF1).

5. Procédé selon l'une des revendications 2 à 4, **caractérisé en ce que** le deuxième participant (12) demande au premier participant (11) de continuer à transmettre les trames de données (DF1) lorsque le tampon de symboles devient inférieur à un niveau de remplissage inférieur spécifié.

6. Procédé selon l'une des revendications 1 à 5, **caractérisé en ce que** le premier participant (11) continue à transmettre les trames de données (DF1) après une période de suspension spécifiée (td).

7. Procédé selon l'une des revendications 1 à 6, **caractérisé en ce que** le premier participant (11) transmet une trame de suspension (PF1) au deuxième participant (12) pendant l'interruption de la transmission des trames de données (DF).

8. Procédé selon la revendication 7, **caractérisé en ce que** le deuxième participant (12) demande au premier participant (11) de commencer l'envoi de la trame de suspension (PF1) en transmettant une requête de démarrage de suspension active (PR=1).

9. Procédé selon la revendication 8, **caractérisé en ce que** le deuxième participant transmet au premier participant (11) la requête de démarrage de suspension active (PR=1) ou une requête de démarrage de suspension inactive (PR=0) de manière cyclique avec un autre cycle de gestion (Tm2) dans une autre trame de gestion (MF2).

10. Procédé selon l'une des revendications 7 à 9, **caractérisé en ce que** le deuxième participant (12) demande au premier participant (11) de terminer l'envoi de la trame de suspension (PF1) en transmettant une requête de fin de suspension (PER).

11. Procédé selon l'une des revendications 1 à 10, **caractérisé en ce que** le premier participant (11) transmet au deuxième participant (12) une trame de gestion (MF1) de manière cyclique avec un premier cycle de gestion (Tm1), et **en ce que** le premier participant (11) interrompt une transmission de trames de données (DF1) avec une granularité d'un symbole de données (DS), transmet la trame de gestion (MF1) au deuxième participant (12), puis continue la transmission des trames de données (DF1).

12. Procédé selon l'une des revendications 7 à 11, **caractérisé en ce que** le premier participant (11) transmet au deuxième participant (12) une trame de gestion (MF1) de manière cyclique avec un premier cycle de gestion (Tm1), **en ce que** le premier participant (11) interrompt une transmission de trames de données (DF1) avec une granularité d'un symbole de données (DS), transmet la trame de gestion (MF1) au deuxième participant (12), puis continue la transmission des trames de données (DF1), et **en ce que** le premier participant (11) interrompt une transmission de trames de suspension (PF1), transmet la trame de gestion (MF1) au deuxième participant (12), puis continue la transmission de la trame de suspension (PF1).

13. Procédé selon l'une des revendications 1 à 12, **caractérisé en ce que** le deuxième participant (12) transmet au premier participant (11) des symboles de données (DS) dans une autre trame de données (DF2), le premier participant (11) demandant au deuxième participant (12) de suspendre la transmission de l'autre trame de données (DF2) avec une granularité d'un symbole de données (DS) et, le deuxième participant (12) continuant la transmission des autres trames de données (DF2) après la suspension.

14. Réseau (1), de préférence réseau en temps réel, comprenant un premier participant (11) et un deuxième participant (12) relié au premier participant (12) par une liaison de données (V), le premier participant (11) étant conçu pour transmettre au deuxième participant (12) des symboles de données (DS) dans des trames de données (DF1) sur la liaison de données (V), **caractérisé en ce que** le deuxième participant (12) est conçu pour demander au premier participant (11), en cas de retard dans la transmission et/ou le traitement de la trame de données (DF1), de suspendre la transmission des trames de données (DF1) avec une granularité d'un symbole de données (DS) et **en ce que** le premier participant est conçu pour continuer la transmission des trames de données (DF1) après la suspension avec une granularité d'un symbole de données (DS).

15. Réseau (1) selon la revendication 14, **caractérisé en ce que** le deuxième participant (12) comprend un tampon de symboles destiné à stocker temporairement les trames de données (DF1) reçues.
